# EUROPÄISCHE PATENTSCHRIFT

(11) **EP 0 368 088 B1**
(45) Veröffentlichungstag und Bekanntmachung des Hinweises auf die Patenterteilung: **15.02.1995**
(21) Anmeldenummer: 89119922.6
(22) Anmeldetag: 26.10.1989
(51) Int. Cl.: G05B 19/408, G05B 19/409

(54) **Verfahren zum Betrieb eines Industrieroboters**
Drive system for an industrial robot
Système pour faire fonctionner un robot industriel

(30) Priorität: 11.11.1988 DE 3838346
(43) Veröffentlichungstag der Anmeldung: 16.05.1990
(73) Patentinhaber: SIEMENS AKTIENGESELLSCHAFT, 80333 München (DE)
(72) Erfinder: Bold, Rainer, Dipl.-Ing., D-8520 Erlangen (DE); Fuehrer, Diethelm, Dipl.-Ing., D-8525 Uttenreuth (DE)

(56) Entgegenhaltungen:
- EP-A- 0 118 988
- EP-A- 0 144 426
- GB-A- 2 147 121
- GB-A- 2 176 911
- US-A- 3 496 805

## Beschreibung

Die Erfindung bezieht sich auf ein Verfahren zum Betrieb eines Industrieroboters gemäß einem die geplante Vorwärtsbewegung steuernden Programm mit Hilfe einer numerischen Steuerung, wobei das Programm neben parametrisierbaren Weginformationen für den Betrieb relevante Zusatzinformationen beinhaltet und wobei das Programm von einem Hauptprogramm in mindestens ein Unterprogramm verzweigbar ist.

Derartige Verfahren werden bei handelsüblichen Robotern eingesetzt, wenn komplexe Bewegungsabläufe beispielsweise für unterschiedliche Technologien vorzusehen sind. Bestimmte Betriebszustände, insbesondere Störzustände, machen es aber u.U. erforderlich, die geplante Vorwärtswegung abzubrechen und die Bewegungsfolge in umgekehrter Reihenfolge als Rückwärtsbewegung auszuführen. Wenn jedoch verzweigte Programme und parametrisierte Weginformationen vorliegen, ist eine einfache inverse Bearbeitung des Bewegungsprogrammes unmöglich.

Aus der US-A-3 496 805 ist in diesem Zusammenhang allerdings ein Verfahren der eingangs genannten Art bekannt, wobei ein zusätzlicher Programmablaufspeicher der Steuerung beigeordnet ist, der Weginformationen über Rückzugsbewegungen aus dem dazu zu unterbrechenden Programm und Anfahrbewegungen an den Ort der Unterbrechung aufnimmt. Ferner können diesem Dokument die Merkmale entnommen werden, daß während der programmierten Bewegung fortlaufend die jeweils aktuellen Weginformationen gespeichert werden und daß der Programmablaufspeicher als Datenbasis für eine Rückzugsbewegung entlang der programmgemäß erfolgten Bewegungsbahn verwendet wird. Darüber hinaus sind aus diesem Stand der Technik auch die Merkmale bekannt, daß über einen Bediengerät ein Start-Minus-Befehl an die Steuerung leitbar ist, daß bei der Umkehr der Rückwärtsbewegung von der Steuerung der Programmablaufspeicher als Datenquelle verwendet wird und daß, wenn der Ort der Programmunterbrechung wieder erreicht worden ist, eine Rückkehr in das unterbrochene Programm möglich ist.

Desweiteren ist aus dem Dokument GB-A-217 911 bekannt, einen Industrieroboter, der ein Bediengerät mit Anzeigevorrichtung aufweist, mit einer Rückzugsfunktion auszustatten. Aus beiden Dokumenten ist es jedoch nicht bekannt, fortlaufend den Bediener darüber zu informieren, welche Position eines zurückzuziehenden Objektes, sei es ein Werkzeug oder eine Roboterspitze, während der Rückzugsbewegung jeweils erreicht ist.

Aufgabe der Erfindung ist es, ein Verfahren zum Betrieb eines Roboters zu schaffen, bei dem während einer Rückzugsbewegung der Bediener stets darüber informiert ist, wo sich das zu steuernde Objekt entsprechend dem Ursprungsprogramm befindet.

Gemäß der Erfindung wird dies durch die Merkmale des Anspruchs 1 erreicht.

Es sei noch darauf hingewiesen, daß die Rückzugsbewegung, die entsprechend der ursprünglichen programmierten Bewegungsbahn erfolgt, durch einen Start-Plus-Befehl vom Bediener leicht zurückgenommen werden kann und dann ebenfalls bahntreu der Ort der Programmunterbrechung wieder angefahren werden kann.

Dadurch, daß den Weginformationen die relevanten Nullpunkt- und Werkzeugkorrekturdaten beigestellt werden, ist eine ausgesprochen einfache Orts- bzw. Wegbestimmung auch während der Rückwärtsbearbeitung stets gewährleistet.

Dadurch, daß den Weginformationen richtungsspezifisch wirkende Zusatzinformationen beigestellt werden, können beispielsweise Umkehrungen einer bahnbezogenen Regelrichtung bei einer Andruckregelung mit Sensoren vorgenommen werden, indem diese Zusatzinformationen aus dem Programmablaufspeicher entnommen werden und von einem Programminterpreter bewertet werden, der dementsprechend in die Steuerung eingreift.

Wenn es nicht erforderlich ist, von jedem beliebigen Bahnpunkt aus in den Ursprungspunkt an der Bewegung zurückzufahren, erweist es sich als vorteilhaft, daß der Programmablaufspeicher jeweils nur zur Speicherung einer begrenzten Zahl von Weginformationen ausgelegt ist.

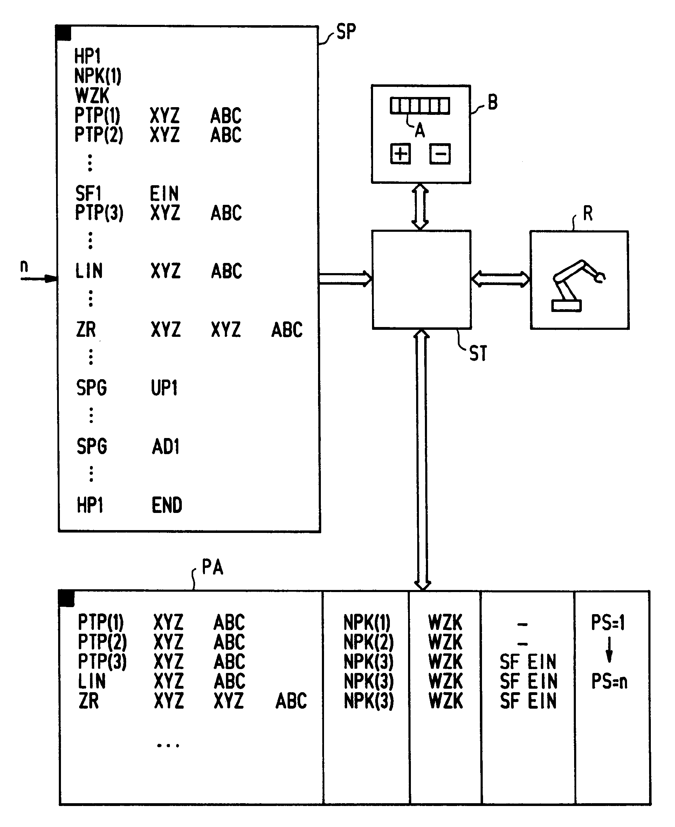

Ein Ausführungsbeispiel der Erfindung ist in der Zeichnung dargestellt und wird im folgenden näher erläutert.

In Form eines blockförmigen Schaubildes ist dabei ein Roboter R gezeigt, dessen Bewegungen von einer Steuerung ST gelenkt werden. Die Bewegung des Roboters R erfolgt dabei gemäß einem Programm, das in einem Speichermedium SP abgelegt ist. Ferner sind über ein Bediengerät B manuelle Eingaben an die Steuerung ST möglich und ebenso ist im Bediengerät B eine Anzeige A zum Visualisieren von Betriebszuständen der Steuerung ST bzw. des Roboters R vorgesehen.

Gemäß der Erfindung ist die Steuerung ST jedoch nicht nur mit dem Speichermedium SP verbunden, sondern es ist ein zusätzlicher Programmablaufspeicher PA vorgesehen, auf dessen Funktion im folgenden noch eingegangen wird. Die einzelnen Blöcke der Anordnung stehen in einem durch Richtungspfeile angedeuteten Datenaustausch miteinander.

Es sei zunächst ein die geplante Vorwärtsbewegung des Roboters R bestimmendes Programm im Speichermedium SP beispielhaft angegeben. Das Programm möge mit einem Befehl HPl beginnen, der darauf hinweist, daß ein Hauptprogramm startet. Daraufhin folgt ein Befehl NPK, der Werte für eine relevante Nullpunktkorrektur angibt. Eine Ergänzung dieses Befehls NPK in der Darstellung mit einem Vermerk (1) soll darauf hinweisen, daß es sich bei dieser Nullpunktkorrektur um die erste im Programm erfolgende Nullpunktkorrektur handelt, die bedarfsweise durch weitere Nullpunktkorrekturen ersetzt werden kann. Als nächstes folgt ein Befehl WZK für die Werkzeugkorrektur, dem sich ein Befehl PTP (point-to-point) anschließt, dessen relevante Raumkoordinaten durch X, Y und Z und dessen relevante Richtungen durch Werte A, B und C angegeben sind. Diesem Befehl kann sich beispielsweise ein weiterer Befehl PTP mit ebenfalls Werten X, Y, Z und A, B, C anschließen, wobei die zweitgenannten Werte von X, Y und Z sowie A, B und C selbstverständlich andere Werte annehmen können als die dem vorgenannten PTP-Befehl zugeordneten entsprechenden Werte. Zur Unterscheidung ist daher in der Darstellung den beiden Befehlen PTP jeweils ein Hinweis (1) bzw. (2) hinzugefügt.

Nach einer durch eine Punktierung angedeuteten Abfolge von Befehlen mag dann beispielsweise ein Befehl SF EIN einsetzen, der eine Sensorfunktion schaltet. Diesem Befehl mag sich dann ein dritter Befehl PTP (3) XYZ ABC anschließen. Wiederum nach einigen Programmschritten bei einem Programmschritt n möge dann ein Befehl LIN für einen Linearsatz erfolgen, dessen Koordinaten X, Y und Z bzw. Richtungen A, B und C ebenfalls im Programm angegeben werden. Nach einigen weiteren Befehlen folgt dann ein Zirkularsatz ZR mit zwei Raumkoordinaten X, Y und Z sowie Richtungswerte A, B und C, woraufhin ein Sprung in ein Unterprogramm UP1 mit Hilfe eines Befehls SPG UP1 vorgenommen wird.

Die im Hauptprogramm HP1 angegebenen Koordinaten können sowohl in Form echter Orts-Weg- und Richtungsformationen (im folgenden durchweg als Weginformationen bezeichnet) vorliegen als auch parametrisiert vorgegeben werden. Im letztgenannten Fall ist hierbei nicht nur ein Sprung in Unterprogramme, z.B. das Unterprogramm UP1, sondern beispielsweise auch ein Sprung auf spezielle Adressen möglich, wie dies durch einen Befehl SPG AD1 als Sprung auf eine Adresse AD1 angedeutet ist. Das gesamte Programm wird letztendlich durch einen Befehl HP1 END beendet.

Während des Abarbeitens des Programms des Speichermediums SP in der Steuerung ST werden die jeweils für die Bewegung des Roboters R sich ergebenden relevanten Informationen fortlaufend im Programmablaufspeicher PA abgelegt und zwar so, daß dabei jeweils Weginformationen gespeichert werden. Beim Abarbeiten des oben dargelegten Programms werden dazu die Befehle PTP (1) XYZ ABC, PTP (2) XYZ ABC, PTP (3) XYZ ABC und die Befehle LIN XYZ ABC und ZR XYZ XYZ ABC nacheinander nicht parametrisiert, sondern mit ihren resultierenden Werten gespeichert. Wenn allein aus diesen Befehlen nicht sofort die endgültigen Weginformationen für den Roboter R ersichtlich sind, werden zusätzlich jeweils die im entsprechenden Programmschritt aktuellen Werte für Nullpunktkorrektur NPK und Werkzeugkorrektur WZK mitgeführt. Ferner werden parallel zu den Weginformationen auch alle für eine Rückwärtsbearbeitung relevanten Zusatzinformationen parallel abgespeichert. So wird im Ausführungsbeispiel als eine Möglichkeit die Sensorfunktion SF EIN mitgeführt, damit bei einem Rückwärtsbearbeiten für einen derartigen Sensor beispielsweise die Umkehrung einer bahnbezogenen Regelrichtung bei der Andruckregelung erfolgen kann. Desweiteren wird zu jedem relevanten wegbestimmenden Wert auch der jeweils zugehörige Programmschritt PS im Programmablaufspeicher PA mitgeführt. Im Ausführungsbeispiel ist beispielsweise der Befehl LIN XYZ ABC mit n bezeichnet und eben dieser Wert n findet sich daher auch im Programmablaufspeicher PA.

Wenn die Vorwärtsbearbeitung entsprechend dem im Speichermedium SP abgelegten Programm bis zum Befehl n erfolgt ist, finden sich dann im Programmablaufspeicher PA die in der Darstellung gezeigten Befehle mit Ausnahme des Befehls ZR XYZ XYZ ABC. Es sei angenommen, daß an dieser Stelle des Programmes von einem Bediener eine Rückwärtsbearbeitung gewünscht wird. Dazu wird vom Bediener zum Auslösen eines Start-Minus-Befehls eine Taste "-" des Bediengerätes B betätigt und die Steuerung ST entnimmt nun für die Steuerung des Roboters R die relevanten Wegdaten dem Programmablaufspeicher PA. Dieser wird dann fortlaufend entgegen seiner Einschreiberichtung ausgelesen und steuert die Bewegung des Roboters R. Dabei dienen die im Programmablaufspeicher PA mitgeführten Verweise auf die Programmschritte PS des zugrundeliegenden, im Speichermedium SP abgelegten Programms dazu, daß eben diese Programmschritte auf der Anzeige A des Bediengerätes B dem Bediener aufgezeigt werden. Der Bediener ist daher stets darüber informiert, wo er sich im ihm vertrauten, die Vorwärtsbewegung steuernden Programm befindet.

Die Rückwärtsbewegung wird solange aufrecht erhalten, bis vom Bediener über das Bediengerät B durch Betätigen einer Taste "+" eines Start-Plus-Befehls ausgelöst wird, woraufhin der Programmablaufspeicher PS mit invertierter Richtung ausgelesen wird, um nunmehr eine Vorwärtsbewegung des Roboters R zu steuern. Dieser Vorgang kann solange erfolgen, bis im Programmablaufspeicher PA der Punkt erreicht ist, bei dem der Sprung in die Rückwärtsbearbeitung erfolgt ist. Von diesem Zeitpunkt an wird die Steuerung ST wieder mit den Daten aus dem Speichermedium SP versorgt.

Die der Erfindung zugrundeliegende Idee könnte durchaus auch auf vielachsige Werkzeugmaschinensteuerungen übertragen werden.

## Patentansprüche

1. Verfahren zum Betrieb eines Industrieroboters (R) gemäß einem eine geplante Bewegungsbahn steuernden Programm mit Hilfe einer numerischen Steuerung (ST), wobei das Programm neben parametrisierbaren Weginformationen für den Betrieb relevante Zusatzinformationen beinhaltet und wobei das Programm von einem Hauptprogramm in mindestens ein Unterprogramm verzweigbar ist und wobei ein zusätzlicher Programmablaufspeicher (PA) der Steuerung (ST) beigeordnet ist, wobei während der programmierten Bewegung fortlaufend die jeweils aktuellen Weginformationen gespeichert werden, wobei über ein Bediengerät (B), ein Start-Minus-Befehl an die Steuerung (ST) leitbar ist, die daraufhin den Programmablaufspeicher (PA) als Datenbasis für eine Rückzugsbewegung entlang der programmgemäß erfolgten Bewegungsbahn verwendet, wobei die Rückwärtsbewegung wieder umkehrbar ist, und auch hierbei von der Steuerung (ST) der Programmablaufspeicher (PA) als Datenquelle verwendet wird, und wobei, wenn dabei der Ort der Programmunterbrechung wieder erreicht worden ist, eine Rückkehr in das unterbrochene Programm möglich ist dadurch gekennzeichnet, daß mit den Weginformationen auch ein Verweis auf den jeweils zugrundeliegenden Programmschritt gespeichert wird, daß vom Bediengerät (B) die bei der Rückzugsbewegung jeweils erreichten ursprünglich zugrundeliegenden Programmschritte angezeigt werden, und daß die Umkehr der Rückwärtsbewegung durch einen über das Bediengrät (B) eingebbaren Start-Plus-Befehl leitbar ist.

2. Verfahren nach Anspruch 1, **dadurch gekennzeichnet**, daß den Weginformationen die relevanten Nullpunkt- und Werkzeugkorrekturdaten (NPK,WZK) beigestellt werden.

3. Verfahren nach einem der vorstehenden Ansprüche, **dadurch gekennzeichnet**, daß den Weginformationen richtungsspezifisch wirkende Zusatzinformationen beigestellt werden.

4. Verfahren nach einem der vorstehenden Ansprüche, **dadurch gekennzeichnet**, daß der Programmablaufspeicher (PA) jeweils nur zur Speicherung einer begrenzten Anzahl von Weginformationen ausgelegt ist.

## Claims

1. Method for operating an industrial robot (R) according to a program controlling a planned trajectory, with the aid of a numerical control (ST), wherein, besides parameterizable positional information, the program contains relevant additional information for operation and wherein the program is capable of being branched off from a main program into at least one sub-program and wherein an additional program flow memory (PA) is assigned to the control (ST), wherein the respective current positional information is continuously stored during the programmed movement, wherein, by way of an operator device (B), a start-minus order can be routed to the control (ST) which thereupon uses the program flow memory (PA) as a data base for a return movement along the trajectory completed according to the program, wherein the backwards movement can be reversed again and the program flow memory (PA) is also used here as a data source by the control (ST), and wherein, when the location of the program interrupt has been reached once more, a return to the interrupted program is possible, characterised in that, together with the positional information, there is also stored a reference to the respective program step used as a basis, in that the respective program steps originally used as a basis and completed during the return movement are displayed by the operator device (B), and in that the reversal of the backwards movement can be prompted by a start-plus command which can be input by way of the operator device (B).

2. Method according to claim 1, characterised in that the relevant zero offset data and tool offset data (NPK, WZK) are made available to the positional information.

3. Method according to one of the preceding claims, characterised in that additional information which is effective in a directionally specific way is made available to the positional information.

4. Method according to one of the preceding claims, characterised in that the respective program flow memory (PA) is designed for storing only a limited amount of positional information.

## Revendications

1. Procédé pour faire fonctionner un robot industriel (R) selon un programme commandant une trajectoire prévue de mouvement à l'aide d'une commande numérique (ST), le programme contenant, en plus des informations de cheminement qui peuvent être paramétrées, des informations supplémentaires pertinentes pour le fonctionnement et le programme pouvant passer d'un programme principal dans au moins un sous-programme, et une mémoire supplémentaire (PA) de déroulement de programme étant adjointe à la commande (ST), les informations de cheminement actuelles étant mémorisées en continu pendant le mouvement programmé, une instruction de démarrage "moins" pouvant être transmise, par l'intermédiaire d'un appareil de contrôle (B), à la commande (ST) qui, ensuite, utilise la mémoire de déroulement de programme (PA) comme base de données pour un mouvement rétrograde suivant la trajectoire de mouvement qui s'est effectuée selon le programme, le mouvement en arrière pouvant être de nouveau inversé et la mémoire de déroulement de programme (PA) étant aussi dans ce cas utilisée par la commande (ST) comme source de données, et un retour dans le programme interrompu étant possible lorsque le lieu de l'interruption de programme a de nouveau été atteint, caractérisé par le fait que l'on mémorise aussi une référence au pas de programme à la base de la trajectoire de mouvement en plus des informations de cheminement, on indique les pas de programme à la base de la trajectoire de mouvement atteints initialement lors du mouvement rétrograde par l'appareil de contrôle (B) et on peut commander l'inversion du mouvement rétrograde par une instruction de démarrage "plus" qui peut être introduite par l'intermédiaire de l'appareil de contrôle (B).

2. Procédé selon la revendication 1, caractérisé par le fait que l'on met les données pertinentes de correction du point d'origine et de l'outil (NPK, WZK) à la disposition des informations de cheminement.

3. Procédé selon l'une des revendications précédentes, caractérisé par le fait que l'on met des informations supplémentaires opérant de manière spécifique à la direction à la disposition des informations de cheminement.

4. Procédé selon l'une des revendications précédentes, caractérisé par le fait que la mémoire de déroulement de programme (PA) n'est prévue que pour la mémorisation d'un nombre limité d'informations de cheminement.
